# EUROPEAN PATENT APPLICATION

(11) **EP 4 564 714 A1**
(43) Date of publication of application: **04.06.2025**
(21) Application number: 23851494.7
(22) Date of filing: 30.06.2023
(51) Int. Cl.: H04L 1/18, H04L 1/16

(54) **COMMUNICATION METHOD AND COMMUNICATION APPARATUS**

(30) Priority: 09.08.2022 CN 202210951769
(71) Applicant: Huawei Technologies Co., Ltd., Shenzhen, Guangdong 518129 (CN)
(72) Inventor: XU, Bin, Shenzhen, Guangdong 518129 (CN); ZHENG, Lili, Shenzhen, Guangdong 518129 (CN); ZHAO, Yang, Shenzhen, Guangdong 518129 (CN)
(74) Representative: Maiwald GmbH
(86) International application number: PCT/CN2023/105164
(87) International publication number: WO 2024/032267

(57) **Abstract**

This application provides a communication method and a communication apparatus. The method includes: A terminal device receives first indication information from a network device, where the first indication information includes at least one first threshold; and the terminal device determines, based on the first indication information, to disable or enable a HARQ function of at least one HARQ process. According to the method provided in embodiments of this application, a delay problem of a HARQ mechanism caused by a large delay in non-terrestrial network communication can be effectively resolved, thereby increasing a data transmission rate.

## Description

This application claims priority to Chinese Patent Application No. 202210951769.6, filed with the China National Intellectual Property Administration on August 9, 2022 and entitled "COMMUNICATION METHOD AND COMMUNICATION APPARATUS", which is incorporated herein by reference in its entirety.

### TECHNICAL FIELD

This application relates to the field of communication technologies, and more specifically, to a communication method and a communication apparatus.

### BACKGROUND

A hybrid automatic repeat request (hybrid automatic repeat request, HARQ) is a method for ensuring data transmission reliability. After receiving data, a receive end detects whether an error occurs on a received data packet. If the data is correctly decoded, the receive end sends an acknowledgment (ACK) to a transmit end. After receiving the ACK, the transmit end sends a next data packet. If decoding fails, the receive end sends a negative acknowledgment (NACK) to a transmit end. After receiving the NACK, the transmit end resends the same data packet. When a HARQ with soft combination is used, error data received by the receive end is stored in a HARQ buffer, and soft combination is performed on the error data and subsequently received retransmitted data for decoding. If decoding still fails, a process of retransmission and soft combination of the data packet is repeated.

Currently, in a non-terrestrial network (non-terrestrial network, NTN) or an internet of things non-terrestrial network (internet of things non-terrestrial network, IoT NTN), when data is transmitted between a terminal device and a network device, the data needs to be forwarded via a satellite. Therefore, a propagation distance is long, resulting in long round-trip time (round-trip time, RTT) of data transmission. A large delay of NTN transmission causes a single HARQ process number to be occupied for a long period of time. Consequently, a data transmission rate is reduced, in other words, a HARQ delay is generated.

Therefore, how to resolve a delay problem of a HARQ mechanism caused by a large delay in NTN communication has become a technical problem that needs to be urgently resolved in this field.

### SUMMARY

Embodiments of this application provide a communication method and a communication apparatus, to disable or enable a HARQ function of a HARQ process based on an actual requirement, thereby increasing a data transmission rate.

According to a first aspect, a communication method is provided. The method may be performed by a terminal device, or may be performed by a chip used in the terminal device. The following uses an example in which the method is performed by the terminal device for description. The terminal device receives first indication information from a network device, where the first indication information includes at least one first threshold. The terminal device determines, based on the first indication information, to disable or enable a HARQ function of at least one HARQ process.

According to the communication method provided in this embodiment of this application, the network device determines the first indication information, and sends the first indication information to the terminal device, and the terminal device determines, based on the first indication information, to disable or enable the HARQ function of the at least one HARQ process. This can effectively resolve problems, in a conventional technology, of a high HARQ process buffer demand and a HARQ mechanism delay caused by a large delay in an NTN system, to increase a data transmission rate.

Specifically, in a possible implementation, the first indication information further includes first information, and that the terminal device determines, based on the first indication information, to disable or enable a HARQ function of at least one HARQ process includes: The terminal device determines, based on the at least one first threshold and the first information, to disable or enable the HARQ function of the at least one HARQ process, where the first information is used to determine a first distance or determine a first timing advance TA.

Therefore, when the first indication information includes the first information, the terminal device may disable or enable the HARQ function of the at least one HARQ process based on the at least one first threshold in the first indication information and the first distance or the first timing advance determined based on the first information. This can effectively resolve problems, in a conventional technology, of a high HARQ process buffer demand and a HARQ mechanism delay caused by a large delay in an NTN system, to increase a data transmission rate.

Specifically, in this embodiment of this application, the first distance includes: a distance between the terminal device and a satellite, a distance between the terminal device and a first reference point, a distance between the terminal device and the network device, or a sum of the distance between the terminal device and the satellite and a distance between the satellite and the network device.

In this embodiment of this application, the first TA includes: a TA from the terminal device to a satellite, a TA from the terminal device to a first reference point, a TA from the terminal device to the network device, or a sum of the TA from the terminal device to the satellite and a TA from the satellite to the network device.

With reference to the first aspect, in some implementations of the first aspect, the method further includes: The terminal device obtains first information, where the first information is used to determine a first distance or a first TA; and the terminal device determines, based on the first indication information and the first information, to disable or enable the HARQ function of the at least one HARQ process.

Therefore, the terminal device may disable or enable the HARQ function of the at least one HARQ process based on the at least one first threshold in the first indication information and the first distance or the first timing advance determined based on the first information. This can effectively resolve problems, in a conventional technology, of a high HARQ process buffer demand and a HARQ mechanism delay caused by a large delay in an NTN system, to increase a data transmission rate.

With reference to the first aspect, in some implementations of the first aspect, the method further includes: The terminal device sends second indication information to the network device, where the second indication information is used to determine whether the HARQ function of the at least one HARQ process of the terminal device is enabled or disabled.

Therefore, after the terminal device determines to disable or enable the HARQ function of the at least one HARQ process, the network device may disable or enable the HARQ function of the at least one HARQ process based on the received second indication information. This can effectively resolve problems, in a conventional technology, of a high HARQ process buffer demand and a HARQ mechanism delay caused by a large delay in an NTN system, to increase a data transmission rate.

In a possible implementation, the first indication information further indicates a correspondence between the at least one first threshold and the at least one HARQ process.

Therefore, the terminal device may determine the correspondence between the at least one threshold and the at least one HARQ process based on the first indication information. When the terminal device determines to disable or enable the HARQ function of the at least one HARQ process, the network device may disable or enable the HARQ function of the at least one HARQ process based on the correspondence.

With reference to the first aspect, in some implementations of the first aspect, the method further includes: The terminal device receives third indication information from the network device, where the third indication information indicates a correspondence between the at least one first threshold and the at least one HARQ process.

Therefore, the terminal device may determine the correspondence between the at least one threshold and the at least one HARQ process based on the third indication information sent by the network device. When the terminal device determines to disable or enable the HARQ function of the at least one HARQ process, the network device may disable or enable the HARQ function of the at least one HARQ process based on the correspondence.

With reference to the first aspect, in some implementations of the first aspect, the terminal device sends fourth indication information to the network device, where the fourth indication information indicates whether a capability of the terminal device supports disabling of the HARQ function of the at least one HARQ process.

According to the communication method provided in this embodiment of this application, the terminal device may send the fourth indication information to the network device, where the fourth indication information indicates whether the capability of the terminal device supports disabling of the HARQ function of the at least one HARQ process. When the capability of the terminal device supports disabling of the HARQ function of the at least one HARQ process, the terminal device may determine, based on the first indication information, to disable or enable the HARQ function of the at least one HARQ process, so that the network device can continuously schedule data transmission. This effectively resolves a delay problem of a HARQ mechanism caused by a large delay in an NTN, to increase a data transmission rate.

According to a second aspect, a communication method is provided. The method may be performed by a network device, or may be performed by a chip used in the network device. The following uses an example in which the method is performed by the network device for description. The network device determines first indication information, where the first indication information includes at least one first threshold, and the first indication information is used by a terminal device to determine to disable or enable a HARQ function of at least one HARQ process. The network device sends the first indication information to the terminal device.

According to the communication method provided in this embodiment of this application, the network device determines the first indication information, and sends the first indication information to the terminal device, and the terminal device determines, based on the first indication information, to disable or enable the HARQ function of the at least one HARQ process. This can effectively resolve problems, in a conventional technology, of a high HARQ process buffer demand and a HARQ mechanism delay caused by a large delay in an NTN system, to increase a data transmission rate.

Specifically, in this embodiment of this application, the first indication information further includes first information, and the first information is used to determine a first distance or determine a first timing advance TA.

Therefore, when the first indication information includes the first information, the terminal device may disable or enable the HARQ function of the at least one HARQ process based on the at least one first threshold in the first indication information and the first distance or the first timing advance determined based on the first information. This can effectively resolve problems, in a conventional technology, of a high HARQ process buffer demand and a HARQ mechanism delay caused by a large delay in an NTN system, to increase a data transmission rate.

With reference to the second aspect, in some implementations of the second aspect, the method further includes: The network device sends first information to the terminal device, where the first information is used to determine a first distance or determine a first TA.

Specifically, in this embodiment of this application, the first distance includes: a distance between the terminal device and a satellite, a distance between the terminal device and a first reference point, a distance between the terminal device and the network device, or a sum of the distance between the terminal device and the satellite and a distance between the satellite and the network device.

In this embodiment of this application, the first TA includes: a TA from the terminal device to a satellite, a TA from the terminal device to a first reference point, a TA from the terminal device to the network device, or a sum of the TA from the terminal device to the satellite and a TA from the satellite to the network device.

With reference to the second aspect, in some implementations of the second aspect, the method further includes: The network device receives second indication information from the terminal device, where the second indication information is used by the network device to determine whether the HARQ function of the at least one HARQ process of the terminal device is enabled or disabled.

Therefore, after the terminal device determines to disable or enable the HARQ function of the at least one HARQ process, the network device may disable or enable the HARQ function of the at least one HARQ process based on the received second indication information. This can effectively resolve problems, in a conventional technology, of a high HARQ process buffer demand and a HARQ mechanism delay caused by a large delay in an NTN system, to increase a data transmission rate.

In a possible implementation, the first indication information further indicates a correspondence between the at least one first threshold and the at least one HARQ process.

Therefore, the terminal device may determine the correspondence between the at least one threshold and the at least one HARQ process based on the first indication information. When the terminal device determines to disable or enable the HARQ function of the at least one HARQ process, the network device may disable or enable the HARQ function of the at least one HARQ process based on the correspondence.

With reference to the second aspect, in some implementations of the second aspect, the method further includes: The network device sends third indication information to the terminal device, where the third indication information indicates a correspondence between the at least one first threshold and the at least one HARQ process.

Therefore, the network device may send the third indication information to the terminal device, and the terminal device may determine the correspondence between the at least one threshold and the at least one HARQ process based on the third indication information sent by the network device. When the terminal device determines to disable or enable the HARQ function of the at least one HARQ process, the network device may disable or enable the HARQ function of the at least one HARQ process based on the correspondence.

With reference to the second aspect, in some implementations of the second aspect, the method further includes: The network device receives fourth indication information from the terminal device, where the fourth indication information indicates whether a capability of the terminal device supports disabling of the HARQ function of the at least one HARQ process.

According to the communication method provided in this embodiment of this application, the terminal device may send the fourth indication information to the network device, where the fourth indication information indicates whether the capability of the terminal device supports disabling of the HARQ function of the at least one HARQ process. When the capability of the terminal device supports disabling of the HARQ function of the at least one HARQ process, the terminal device may determine, based on the first indication information, to disable or enable the HARQ function of the at least one HARQ process, so that the network device can continuously schedule data transmission. This effectively resolves a delay problem of a HARQ mechanism caused by a large delay in an NTN, to increase a data transmission rate.

According to a third aspect, a communication method is provided, and includes: A terminal device receives fifth indication information from a network device, where the fifth indication information includes at least one of the following: a corresponding service type when a HARQ function of a HARQ process needs to be disabled or enabled, corresponding service quality information when the HARQ function of the HARQ process needs to be disabled or enabled, a corresponding data type when the HARQ function of the HARQ process needs to be disabled or enabled, and a corresponding deployment scenario or cell type when the HARQ function of the HARQ process needs to be disabled or enabled; and the terminal device determines, based on the fifth indication information, to disable or enable a HARQ function of at least one HARQ process.

According to the communication method provided in this embodiment of this application, the network device determines the fifth indication information, and sends the fifth indication information to the terminal device, and the terminal device and the network device may determine, based on the fifth indication information, to disable or enable the HARQ function of the at least one HARQ process. This effectively resolves problems, in a conventional technology, of a high HARQ process buffer demand and a HARQ mechanism delay caused by a large delay in an NTN system, to increase a data transmission rate.

With reference to the third aspect, in some implementations of the third aspect, the method further includes: The terminal device sends sixth indication information to the network device, where the sixth indication information is used to determine whether the HARQ function of the at least one HARQ process of the terminal device is enabled or disabled.

Therefore, after the terminal device determines to disable or enable the HARQ function of the at least one HARQ process, the network device may disable or enable the HARQ function of the at least one HARQ process based on the received sixth indication information. This can effectively resolve problems, in a conventional technology, of a high HARQ process buffer demand and a HARQ mechanism delay caused by a large delay in an NTN system, to increase a data transmission rate.

With reference to the third aspect, in some implementations of the third aspect, the method further includes: The terminal device sends seventh indication information to the network device, where the seventh indication information indicates whether a capability of the terminal device supports disabling of the HARQ function of the at least one HARQ process.

According to the communication method provided in this embodiment of this application, the terminal device may send the seventh indication information to the network device, where the seventh indication information indicates whether the capability of the terminal device supports disabling of the HARQ function of the at least one HARQ process. When the capability of the terminal device supports disabling of the HARQ function of the at least one HARQ process, the terminal device may determine, based on the fifth indication information, to disable or enable the HARQ function of the at least one HARQ process, so that continuous scheduling of the network device can be implemented. This effectively resolves a delay problem of a HARQ mechanism caused by a large delay in an NTN, to increase a data transmission rate.

According to a fourth aspect, a communication method is provided. The method may be performed by a network device, or may be performed by a chip used in the network device. The following uses an example in which the method is performed by the network device for description. The method includes: The network device determines fifth indication information, where the fifth indication information includes at least one of the following: a corresponding service type when a HARQ function of a HARQ process needs to be disabled or enabled, corresponding service quality information when the HARQ function of the HARQ process needs to be disabled or enabled, a corresponding data type when the HARQ function of the HARQ process needs to be disabled or enabled, and a corresponding deployment scenario or cell type when the HARQ function of the HARQ process needs to be disabled or enabled; and the network device sends the fifth indication information to a terminal device.

According to the communication method provided in this embodiment of this application, the network device determines the fifth indication information, and sends the fifth indication information to the terminal device, and the terminal device and the network device may determine, based on the fifth indication information, to disable or enable the HARQ function of the at least one HARQ process, so that the network device can continuously schedule data transmission. This effectively resolves problems, in a conventional technology, of a high HARQ process buffer demand and a HARQ mechanism delay caused by a large delay in an NTN system, to increase a data transmission rate.

With reference to the fourth aspect, in some implementations of the fourth aspect, the method further includes: The network device receives sixth indication information from the terminal device, where the sixth indication information is used to determine whether the HARQ function of the at least one HARQ process of the terminal device is enabled or disabled.

Therefore, after the terminal device determines to disable or enable the HARQ function of the at least one HARQ process, the network device may disable or enable the HARQ function of the at least one HARQ process based on the received sixth indication information. This can effectively resolve problems, in a conventional technology, of a high HARQ process buffer demand and a HARQ mechanism delay caused by a large delay in an NTN system, to increase a data transmission rate.

With reference to the fourth aspect, in some implementations of the fourth aspect, the method further includes: The network device receives seventh indication information from the terminal device, where the seventh indication information indicates whether a capability of the terminal device supports disabling of the HARQ function of the at least one HARQ process.

According to the communication method provided in this embodiment of this application, the terminal device may send the seventh indication information to the network device, where the seventh indication information indicates whether the capability of the terminal device supports disabling of the HARQ function of the at least one HARQ process. When the capability of the terminal device supports disabling of the HARQ function of the at least one HARQ process, the terminal device may determine, based on the fifth indication information, to disable or enable the HARQ function of the at least one HARQ process, so that continuous scheduling of the network device can be implemented. This effectively resolves a delay problem of a HARQ mechanism caused by a large delay in an NTN, to increase a data transmission rate.

According to a fifth aspect, a communication apparatus is provided. For beneficial effects, refer to the descriptions in the first aspect. Details are not described herein again. The communication apparatus has a function of implementing the behavior in the method instance in the first aspect. The function may be implemented by hardware, or may be implemented by hardware executing corresponding software. The hardware or the software includes one or more modules corresponding to the foregoing function. In a possible design, the communication apparatus includes: a transceiver unit, configured to receive first indication information from a network device, where the first indication information includes at least one first threshold; and a processing unit, configured to determine, based on the first indication information received by the transceiver unit, to disable or enable a HARQ function of at least one HARQ process. These modules may perform corresponding functions in the method example in the first aspect. For details, refer to the detailed descriptions in the method example. Details are not described herein again.

According to a sixth aspect, a communication apparatus is provided. For beneficial effects, refer to the descriptions in the second aspect. Details are not described herein again. The communication apparatus has a function of implementing the behavior in the method instance in the second aspect. The function may be implemented by hardware, or may be implemented by hardware executing corresponding software. The hardware or the software includes one or more modules corresponding to the foregoing function. In a possible design, the communication apparatus includes: a processing unit, configured to determine first indication information, where the first indication information includes at least one first threshold, and the first indication information is used by a terminal device to determine to disable or enable a HARQ function of at least one HARQ process; and a transceiver unit, configured to send, to the terminal device, the first indication information determined by the processing unit. These modules may perform corresponding functions in the method example in the second aspect. For details, refer to the detailed descriptions in the method example. Details are not described herein again.

According to a seventh aspect, a communication apparatus is provided. For beneficial effects, refer to the descriptions in the third aspect. Details are not described herein again. The communication apparatus has a function of implementing the behavior in the method instance in the third aspect. The function may be implemented by hardware, or may be implemented by hardware executing corresponding software. The hardware or the software includes one or more modules corresponding to the foregoing function. In a possible design, the communication apparatus includes: a transceiver unit, configured to receive fifth indication information from a network device, where the fifth indication information includes at least one of the following: a corresponding service type when a HARQ function of a HARQ process needs to be disabled or enabled, corresponding service quality information when the HARQ function of the HARQ process needs to be disabled or enabled, a corresponding data type when the HARQ function of the HARQ process needs to be disabled or enabled, and a corresponding deployment scenario or cell type when the HARQ function of the HARQ process needs to be disabled or enabled; and a processing unit, configured to determine, based on the fifth indication information received by the transceiver unit, to disable or enable a HARQ function of at least one HARQ process. These modules may perform corresponding functions in the method example in the first aspect. For details, refer to the detailed descriptions in the method example. Details are not described herein again.

According to an eighth aspect, a communication apparatus is provided. For beneficial effects, refer to the descriptions in the fourth aspect. Details are not described herein again. The communication apparatus has a function of implementing the behavior in the method instance in the fourth aspect. The function may be implemented by hardware, or may be implemented by hardware executing corresponding software. The hardware or the software includes one or more modules corresponding to the foregoing function. In a possible design, the communication apparatus includes: a processing unit, configured to determine fifth indication information, where the fifth indication information includes at least one of the following: a corresponding service type when a HARQ function of a HARQ process needs to be disabled or enabled, corresponding service quality information when the HARQ function of the HARQ process needs to be disabled or enabled, a corresponding data type when the HARQ function of the HARQ process needs to be disabled or enabled, and a corresponding deployment scenario or cell type when the HARQ function of the HARQ process needs to be disabled or enabled; and a transceiver unit, configured to send, to a terminal device, the fifth indication information determined by the processing module.

According to a ninth aspect, a communication apparatus is provided, including a processor. The processor is coupled to a memory, and may be configured to execute instructions or data in the memory, to implement the method according to any one of the first aspect, the third aspect, and the possible implementations of the first aspect and the third aspect. The communication apparatus further includes a memory. The communication apparatus further includes a communication interface, and the processor is coupled to the communication interface.

In an implementation, the communication apparatus is a terminal device. When the communication apparatus is the terminal device, the communication interface may be a transceiver or an input/output interface.

**In** another implementation, the communication apparatus is a chip or a chip system configured in a terminal device. When the communication apparatus is the chip or the chip system configured in the terminal device, the communication interface may be an input/output interface.

The transceiver may be a transceiver circuit. The input/output interface may be an input/output circuit.

According to a tenth aspect, a communication apparatus is provided, including a processor. The processor is coupled to a memory, and may be configured to execute instructions or data in the memory, to implement the method according to any one of the second aspect, the fourth aspect, and the possible implementations of the second aspect and the fourth aspect. The communication apparatus further includes a memory. The communication apparatus further includes a communication interface, and the processor is coupled to the communication interface.

In an implementation, the communication apparatus is a network device. When the communication apparatus is the network device, the communication interface may be a transceiver or an input/output interface.

In another implementation, the communication apparatus is a chip or a chip system configured in a network device. When the communication apparatus is the chip or the chip system configured in the network device, the communication interface may be an input/output interface.

The transceiver may be a transceiver circuit. The input/output interface may be an input/output circuit.

According to an eleventh aspect, a processor is provided, including an input circuit, an output circuit, and a processing circuit. The processing circuit is configured to: receive a signal through the input circuit and send a signal through the output circuit, to enable the processor to perform the method according to any one of the first aspect to the fourth aspect and the possible implementations of the first aspect to the fourth aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a twelfth aspect, a processing apparatus is provided, including a processor and a memory. The processor is configured to: read instructions stored in the memory, receive a signal through a receiver, and transmit a signal through a transmitter, to perform the method according to any one of the first aspect to the fourth aspect and the possible implementations of the first aspect to the fourth aspect.

There are one or more processors, and there are one or more memories.

The memory may be integrated with the processor, or the memory may be disposed separately from the processor.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner in which the memory and the processor are disposed are not limited in embodiments of this application.

It should be understood that, a related data exchange process such as sending of indication information may be a process of outputting the indication information from the processor, and receiving of capability information may be a process of receiving input capability information by the processor. Specifically, data output by the processor may be output to the transmitter, and input data received by the processor may be from the receiver. The transmitter and the receiver may be collectively referred to as a transceiver.

The processing apparatus according to the twelfth aspect may be one or more chips or a chip system. The processor in the processing apparatus may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory. The memory may be integrated into the processor, or may be located outside the processor and exist independently.

According to a thirteenth aspect, a computer program product is provided. The computer program product includes a computer program (which may also be referred to as code or instructions). When the computer program is run, the method according to any one of the first aspect to the fourth aspect and the possible implementations of the first aspect to the fourth aspect is enabled to be performed.

According to a fourteenth aspect, a computer-readable storage medium is provided. The computer-readable storage medium stores a computer program (which may also be referred to as code or instructions). When the computer program is run on a computer, the computer is enabled to perform the method according to any one of the first aspect to the fourth aspect and the possible implementations of the first aspect to the fourth aspect.

According to a fifteenth aspect, this application further provides a communication method, including:
A network device determines first indication information, where the first indication information includes at least one first threshold.

The network device sends the first indication information to a terminal device, where the first indication information is used by the terminal device to determine to disable or enable a HARQ function of at least one HARQ process.

The terminal device receives the first indication information from the network device, where the first indication information includes the at least one first threshold.

The terminal device determines, based on the first indication information, to disable or enable the HARQ function of the at least one HARQ process.

According to a sixteenth aspect, this application further provides a communication method, including:
A network device determines fifth indication information, and sends the fifth indication information to a terminal device.

The terminal device receives the fifth indication information from the network device, where the fifth indication information includes at least one of the following: a corresponding service type when a HARQ function of a HARQ process needs to be disabled or enabled, corresponding service quality information when the HARQ function of the HARQ process needs to be disabled or enabled, a corresponding data type when the HARQ function of the HARQ process needs to be disabled or enabled, and a corresponding deployment scenario or cell type when the HARQ function of the HARQ process needs to be disabled or enabled.

The terminal device determines, based on the fifth indication information, to disable or enable a HARQ function of at least one HARQ process.

According to a seventeenth aspect, a communication system is provided, including the terminal device and the network device that perform the fifteenth aspect, or including the terminal device and the network device that perform the sixteenth aspect.

### BRIEF DESCRIPTION OF DRAWINGS

FIG. 1 is a diagram of an example of a communication system according to an embodiment of this application;
FIG. 2 is a schematic flowchart of an example of a communication method according to an embodiment of this application;
FIG. 3 is a schematic flowchart of another example of a communication method according to an embodiment of this application;
FIG. 4 is a schematic flowchart of still another example of a communication method according to an embodiment of this application;
FIG. 5 is a block diagram of an example of a communication apparatus according to an embodiment of this application;
FIG. 6 is a block diagram of another example of a communication apparatus according to an embodiment of this application;
FIG. 7 is a block diagram of still another example of a communication apparatus according to an embodiment of this application; and
FIG. 8 is a block diagram of yet another example of a communication apparatus according to this application.

### DESCRIPTION OF EMBODIMENTS

The following describes in detail technical solutions provided in this application with reference to the accompanying drawings.

The technical solutions in embodiments of this application may be applied to various communication systems, for example, a long term evolution (Long Term Evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a future 5th generation (5th generation, 5G) mobile communication system, or a new radio access technology (new radio access technology, NR). The 5G mobile communication system may include non-standalone (non-standalone, NSA) networking and/or standalone (standalone, SA) networking. The technical solutions provided in this application may be further applied to a future communication system, for example, a 6th generation mobile communication system. This is not limited in embodiments of this application.

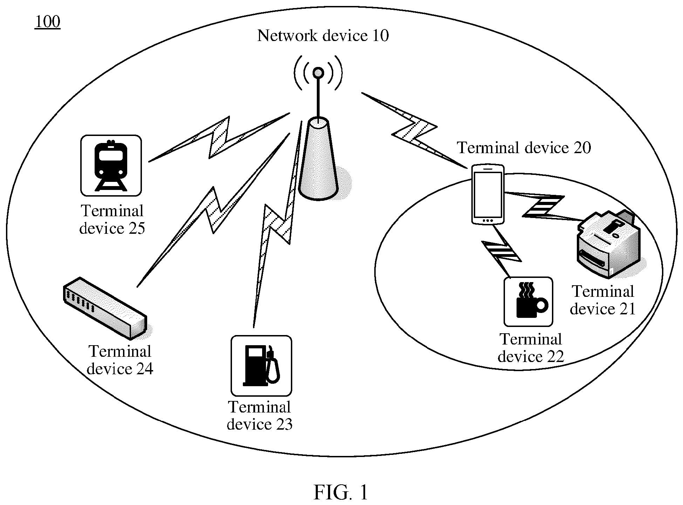

For ease of understanding embodiments of this application, a communication system shown in FIG. 1 is first used as an example to describe in detail a communication system applicable to embodiments of this application. The communication system 100 shown in FIG. 1 includes a network device 10 and at least one terminal device, for example, a terminal device 20, a terminal device 21, a terminal device 22, a terminal device 23, a terminal device 24, and a terminal device 25. In the communication system, the terminal device 20 to the terminal device 25 (six terminal devices) may send uplink data/uplink signals/uplink information to the network device 10, and the network device 10 may send downlink data/a downlink signal/downlink information to any one of the terminal device 20 to the terminal device 25. In addition, the terminal device 20, the terminal device 21, and the terminal device 22 may also form a communication system. The network device 10 may communicate data/a signal/information with any one of the terminal device 20, the terminal device 23, the terminal device 24, and the terminal device 25. The terminal device 20 may further communicate data/a signal/information with the terminal device 21 or the terminal device 22. A plurality of antennas may be configured for each communication device, for example, the network device or the terminal device. For each communication device in the communication system 100, the plurality of configured antennas may include at least one transmit antenna configured to send a signal and at least one receive antenna configured to receive a signal. Therefore, the communication devices in the communication system 100, for example, the network device and the terminal device, may communicate with each other by using a multi-antenna technology.

The network device in embodiments of this application may be any device with a wireless transceiver function. The device includes, but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like. Alternatively, the device may be a gNB or a transmission point (TRP or TP) in a 5G system, for example, an NR system, or one antenna panel or a group (including a plurality of antenna panels) of antenna panels of a base station in the 5G system. Alternatively, the device may be a network node, for example, a baseband unit (BBU) or a distributed unit (distributed unit, DU), that constitutes a gNB or a transmission point.

In some deployments, the gNB in embodiments of this application may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in embodiments of this application.

It should be further understood that, in embodiments of this application, the network device may be an access network device, a satellite device, or the like. In an example, this is not limited in embodiments of this application.

In embodiments of this application, the terminal device may be referred to as user equipment (user equipment, UE), a terminal (terminal), a mobile station (mobile station, MS), a mobile terminal (mobile terminal), or the like. The terminal device may further communicate with one or more core networks via a radio access network (radio access network, RAN). The terminal device may also be referred to as an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a vehicle having a communication function, a wearable device, a terminal device in a future 5G network, or the like. This is not limited in embodiments of this application.

The terminal device and the network device in embodiments of this application may communicate with each other at a radio resource control (radio resource control, RRC) layer, a media access control (media access control, MAC) layer, and a logistics (physical, PHY) layer. A network element structure in embodiments of this application includes an RRC signaling exchange module, a MAC signaling exchange module, and a PHY signaling and data exchange module. The RRC signaling exchange module is a module used by the network device and the terminal device to send and receive RRC signaling. The MAC signaling exchange module is a module used by the network device and the terminal device to send and receive MAC-CE signaling. The PHY signaling and data exchange module is a module used by the network device and the terminal device to send and receive uplink control signaling or downlink control signaling, and uplink data or downlink data.

The following describes in detail a communication method provided in this application with reference to specific embodiments.

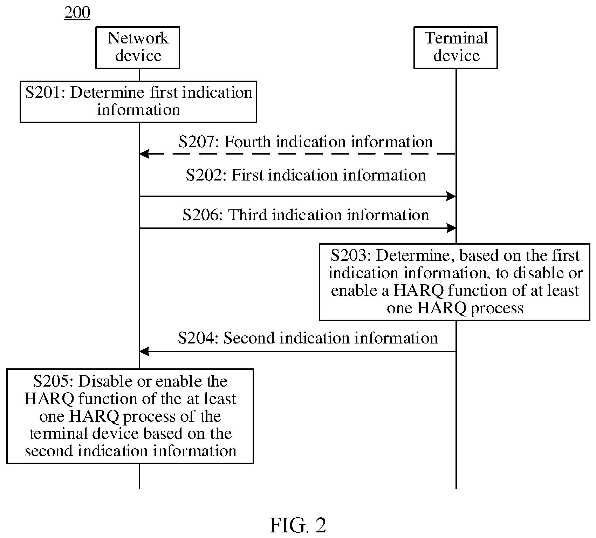

FIG. 2 is a schematic flowchart of an example of a communication method according to an embodiment of this application. The method 200 includes steps S201 to S207. The following describes steps S201 to S207 in detail.

S201: A network device determines first indication information.

Specifically, the network device may determine the first indication information depending on whether a HARQ function of at least one HARQ process of a terminal device needs to be disabled or enabled. In this embodiment, the HARQ function includes HARQ feedback or HARQ retransmission. When the HARQ feedback is disabled, the HARQ feedback does not need to be sent for receiving of a data packet. When the HARQ retransmission is disabled, a corresponding HARQ timer, including a HARQ RTT timer or a HARQ retransmission timer, does not need to be started.

For example, the first indication information may include at least one first threshold, and the first threshold may include a threshold of a first distance or a threshold of a first timing advance TA.

It should be understood that, in this embodiment of this application, the foregoing threshold may also be referred to as a threshold value.

Specifically, in this embodiment of this application, the first distance may include a distance between the terminal device and a satellite, a distance between the terminal device and a reference point, a distance between the terminal device and the network device, or a sum of the distance between the terminal device and the satellite and a distance between the satellite and the network device.

In this embodiment of this application, the first TAmay include: a TAfrom the terminal device to a satellite, a TA from the terminal device to a reference point, a TA from the terminal device to the network device, or a sum of the TA from the terminal device to the satellite and a TA from the satellite to the network device.

It should be understood that, in this embodiment of this application, the reference point may be a ground reference point, for example, a cell center. Alternatively, the reference point may be an air reference point, and the air reference point may be a preset reference point. This is not limited in this application.

S202: The network device sends the first indication information to the terminal device. Correspondingly, the terminal device receives the first indication information sent by the network device.

Specifically, the network device may send the first indication information to the terminal device in a broadcast, multicast, or unicast manner. In a possible implementation, when the network device sends the first indication information in the broadcast manner, the first indication information may be sent by using a system information block. For example, the first indication information may be sent by using a main information block (main information block, MIB), a system information block 1 (system information block, SIB1), or the like.

It should be understood that, in this embodiment of this application, the terminal device may further obtain first information, and the first information is used to determine the first distance or the first TA. For example, the first information may include location information of the terminal device, and location information or TA information of the network device. For example, the terminal device obtains the first information from the terminal device; or the network device sends the first information to the terminal device, and correspondingly, the terminal device receives the first information from the network device. The first information may be included in the first indication information, or the network device may separately send the first information to the terminal device. When the first information includes a plurality of pieces of information, the terminal device may obtain the plurality of pieces of information in the first information in a plurality of manners. For example, the terminal device obtains the location information or the TA information of the network device from the network device, and obtains the location information of the terminal device from the terminal device.

S203: The terminal device determines, based on the first indication information, to disable or enable the HARQ function of the at least one HARQ process.

In a possible implementation, the terminal device may determine, based on a relationship between the at least one first threshold in the first indication information and the first distance or a relationship between the at least one first threshold and the first TA, to disable or enable the HARQ function of the at least one HARQ process. For example, the first distance may be the distance between the network device and the terminal device, and the first TA may be the TA from the terminal device to the network device.

Specifically, the terminal device determines, depending on whether the relationship between the first distance and the at least one first threshold or the relationship between the first TA and the at least one first threshold satisfies a first preset condition, to disable or enable the HARQ function of the at least one HARQ process.

It should be understood that, in this embodiment of this application, the first preset condition used to determine whether to disable the HARQ function of the at least one HARQ process may be predefined or preset. For example, the first preset condition for determining to disable the at least one HARQ process may include: The first distance is greater than the first threshold, the first distance is less than the first threshold, the first distance is not greater than the first threshold, the first distance is not less than the first threshold, or the first distance is equal to the first threshold. Alternatively, the first preset condition for determining to disable the at least one HARQ process may include: The first TA is greater than the first threshold, the first TA is less than the first threshold, the first TA is not greater than the first threshold, the first TA is not less than the first threshold, or the first TA is equal to the first threshold.

S204: The terminal device sends second indication information to the network device. Correspondingly, the network device receives the second indication information sent by the terminal device.

In a possible implementation, when the HARQ function of the at least one HARQ process changes, the terminal device needs to trigger sending of the second indication information to the network device. For example, when a HARQ process changes from being enabled to being disabled, or from being disabled to being enabled, the terminal device needs to send the second indication information to the network device.

In a possible implementation, when the terminal device does not send the second indication information to the network device, the network device enables the HARQ function of the at least one HARQ process of the terminal device by default.

In a possible implementation, the second indication information may be indicated in a form of a bitmap, and values of different bits in the bitmap may correspond to different HARQ processes. A value (for example, 0 or 1) of each bit indicates that a HARQ function of a HARQ process of the terminal device is disabled or enabled. For example, when a value of a bit in the bitmap is 0, it indicates that a HARQ function of a HARQ process corresponding to the value of the bit is enabled; or when a value of a bit in the bitmap is 1, it indicates that a HARQ function of a HARQ process corresponding to the value of the bit is disabled.

S205: The network device determines, based on the second indication information, to disable or enable the HARQ function of the at least one HARQ process.

In a possible implementation, when the terminal device determines to disable the HARQ function of the at least one HARQ process, the terminal device sends the second indication information to the network device, where the second indication information indicates the network device to disable the HARQ function of the at least one HARQ process.

In a possible implementation, when the terminal device determines to enable the HARQ function of the at least one HARQ process, the terminal device may send indication information to the network device to notify the network device to enable the HARQ function of the at least one HARQ process; or the terminal device may not send indication information to the network device, where in this case, the network device enables the HARQ function of the at least one HARQ process of the terminal device by default.

In another possible implementation, the second indication information further includes the first information, the network device determines the first distance or the first TA based on the second indication information, and the network device determines, based on the relationship between the at least one first threshold and the first distance or the first TA, to disable or enable the HARQ function of the at least one HARQ process. It should be understood that, in this embodiment of this application, a solution in which the network device determines, based on the relationship between the at least one first threshold and the first distance or the first TA, to disable or enable the HARQ function of the at least one HARQ process is the same as or similar to step S203. For brevity, details are not described herein again.

In a possible implementation, the network device may periodically determine to disable or enable the HARQ function of the at least one HARQ process of the terminal device; or each time the terminal device reports indication information, the network device is triggered to determine to disable or enable the HARQ function of the at least one HARQ process of the terminal device; or when indication information reported by the terminal device is different from previously reported indication information, the network device is triggered to determine to disable or enable the HARQ function of the at least one HARQ process of the terminal device. For example, when a difference between distance information in the indication information reported by the terminal device and distance information in the previous indication information satisfies a preset condition, the network device is triggered to determine to disable or enable the HARQ function of the at least one HARQ process of the terminal device.

Optionally, in S206, the network device sends third indication information to the terminal device. Correspondingly, the terminal device receives the third indication information sent by the network device.

It should be further understood that, in a possible implementation, the network device may further obtain the third indication information, and the third indication information further includes at least one of the following: ephemeris information, reference point information, and HARQ process information. Specifically, the ephemeris information is a precise location or a track table that varies with time during satellite running, and is a function of time. The reference point information may be a ground reference point, for example, a cell center, or may be an air reference point, for example, a fixed location coordinate. The HARQ process information is a correspondence between the at least one first threshold and the at least one HARQ process. Specifically, the HARQ process information indicates that the at least one first threshold is set for one or more HARQ processes, so that the terminal device and the network device can determine whether a HARQ function of each HARQ process is enabled or disabled. The HARQ process information may be a correspondence between a HARQ process identifier or index and the at least one first threshold, and a plurality of HARQ processes may correspond to a same first threshold.

It should be further understood that the third indication information and the first indication information may be carried in a same message, or the third indication information and the first indication information may be same information, or the third indication information and the first indication information are respectively carried in two different messages. In an example, this is not limited in this application.

Optionally, in S207, the terminal device sends fourth indication information to the network device.

Correspondingly, the network device receives the fourth indication information sent by the terminal device, where the fourth indication information indicates whether a capability of the terminal device supports disabling of the HARQ function of the at least one HARQ process.

It should be understood that, in a possible implementation, before the terminal device receives the first indication information from the network device, the network device receives the fourth indication information from the terminal device, where the fourth indication information indicates whether the capability of the terminal device supports disabling of the HARQ function of the at least one HARQ process. When the terminal device supports disabling of the HARQ function of the at least one HARQ process, the terminal device may perform step S203. When the terminal device does not support disabling of the HARQ function of the at least one HARQ process, the network device considers, by default, that the HARQ function of the at least one HARQ process of the terminal device remains in an enabled state.

It should be further understood that, in this embodiment of this application, a sequence of step S207 is merely an example, and step S207 may be performed in any step in the method 200. This is not limited in this application.

According to the communication method provided in this embodiment of this application, the network device determines the first indication information, and sends the first indication information to the terminal device, and the terminal device determines, based on the first indication information, to disable or enable the HARQ function of the at least one HARQ process, so that the HARQ function of the at least one HARQ process can be disabled or enabled. When the HARQ function of the at least one HARQ process is disabled, the network device can continuously schedule data transmission. This effectively resolves a delay problem of a HARQ mechanism caused by a large delay in an NTN, to increase a data transmission rate. When the HARQ function of the at least one HARQ process is disabled, data scheduling reliability can be improved.

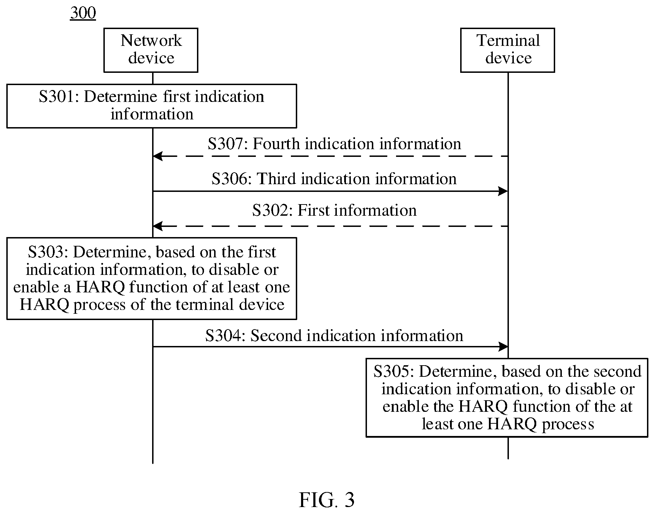

FIG. 3 is a schematic flowchart of another example of a communication method according to an embodiment of this application. The method 300 includes steps S301 to S307. The following describes steps S101 to S307 in detail.

S301: A network device determines first indication information.

For example, the network device may determine the first indication information depending on whether a HARQ function of at least one HARQ process of a terminal device needs to be disabled or enabled.

In this embodiment, the HARQ function includes HARQ feedback or HARQ retransmission. When the HARQ feedback is disabled, the HARQ feedback does not need to be sent for receiving of a data packet. When the HARQ retransmission is disabled, a corresponding HARQ timer, including a HARQ RTT timer or a HARQ retransmission timer, does not need to be started.

In a possible implementation, the first indication information may include at least one first threshold, and the first threshold may include a threshold of a first distance or a threshold of a first timing advance TA.

It should be understood that, in this embodiment of this application, the foregoing threshold may also be referred to as a threshold value.

Specifically, in this embodiment of this application, the first distance may include a distance between the terminal device and a satellite, a distance between the terminal device and a reference point, a distance between the terminal device and the network device, or a sum of the distance between the terminal device and the satellite and a distance between the satellite and the network device.

In this embodiment of this application, the first TAmay include: a TAfrom the terminal device to a satellite, a TA from the terminal device to a reference point, a TA from the terminal device to the network device, or a sum of the TA from the terminal device to the satellite and a TA from the satellite to the network device.

It should be understood that, in this embodiment of this application, the reference point may be a ground reference point, for example, a cell center. Alternatively, the reference point may be an air reference point, and the air reference point may be a preset reference point. This is not limited in this application.

Optionally, in S302, the terminal device sends first information to the network device.

Correspondingly, the network device receives the first information sent by the terminal device, where the first information is used to determine the first distance or the first TA. For example, the first information may include location information of the terminal device, location information of the network device, or TA information of the terminal device.

In a possible implementation, the network device may obtain the first information from the network device; or the terminal device sends the first information to the network device, and correspondingly, the network device receives the first information from the terminal device. The first information may be included in the first indication information, or the terminal device may separately send the first information to the network device. When the first information is different information, the network device may obtain the first information in different manners. For example, the network device obtains the location information or the TA information of the terminal device from the terminal device, and obtains the location information of the network device from the network device.

In a possible implementation, the network device may obtain the first information from another network device or the terminal device. In an example, this is not limited in this embodiment of this application.

S303: The network device determines, based on the first indication information, to disable or enable the HARQ function of the at least one HARQ process of the terminal device.

In a possible implementation, the network device may determine, based on a relationship between the at least one first threshold in the first indication information and the first distance or the first TA, to disable or enable the HARQ function of the at least one HARQ process, where the first information is used to determine the first distance or the first TA. For example, the first distance may be the distance between the network device and the terminal device, and the first TA may be the TA from the terminal device to the network device.

Specifically, the network device determines, depending on whether the relationship between the first distance or the first TA and the at least one first threshold satisfies a first preset condition, to disable or enable the HARQ function of the at least one HARQ process.

It should be understood that, in this embodiment of this application, the first preset condition used to determine whether to disable the HARQ function of the at least one HARQ process may be predefined or may be manually set based on experience. For example, the first preset condition for determining to disable the at least one HARQ process may include: The first distance is greater than the first threshold, the first distance is less than the first threshold, the first distance is not greater than the first threshold, the first distance is not less than the first threshold, or the first distance is equal to the first threshold. Alternatively, the first preset condition for determining to disable the at least one HARQ process may include: The first TA is greater than the first threshold, the first TA is less than the first threshold, the first TA is not greater than the first threshold, the first TA is not less than the first threshold, or the first TA is equal to the first threshold.

In a possible implementation, the network device may periodically determine to disable or enable the HARQ function of the at least one HARQ process of the terminal device; or each time the terminal device reports indication information, the network device is triggered to determine to disable or enable the HARQ function of the at least one HARQ process of the terminal device; or when indication information reported by the terminal device is different from previously reported indication information, the network device is triggered to determine to disable or enable the HARQ function of the at least one HARQ process of the terminal device. For example, when a difference between distance information in the indication information reported by the terminal device and distance information in the previous indication information satisfies a preset condition, the network device is triggered to determine to disable or enable the HARQ function of the at least one HARQ process of the terminal device.

S304: The network device sends second indication information to the terminal device.

Correspondingly, the terminal device receives the second indication information sent by the network device, where the second indication information is used to determine whether the HARQ function of the at least one HARQ process of the terminal device is enabled or disabled.

In a possible implementation, when the network device does not send the second indication information to the terminal device, the terminal device enables the HARQ function of the at least one HARQ process of the terminal device by default.

In a possible implementation, the second indication information may be indicated in a form of a bitmap, and values of different bits in the bitmap may correspond to different HARQ processes. A value (for example, 0 or 1) of each bit indicates that a HARQ function of a HARQ process of the terminal device is disabled or enabled. For example, when a value of a bit in the bitmap is 0, it indicates that a HARQ function of a HARQ process corresponding to the value of the bit is enabled; or when a value of a bit in the bitmap is 1, it indicates that a HARQ function of a HARQ process corresponding to the value of the bit is disabled.

S305: The terminal device determines, based on the second indication information, to disable or enable the HARQ function of the at least one HARQ process.

In a possible implementation, when the network device determines to disable the HARQ function of the at least one HARQ process, the network device sends the second indication information to the terminal device, where the second indication information is used by the terminal device to disable the HARQ function of the at least one HARQ process.

In a possible implementation, when the network device determines to enable the HARQ function of the at least one HARQ process, the network device may send indication information to the terminal device to notify the terminal device to enable the HARQ function of the at least one HARQ process; or the network device may not send indication information to the terminal device, where in this case, the terminal device enables the HARQ function of the at least one HARQ process by default.

In another possible implementation, the second indication information further includes the first information, the terminal device determines the first distance or the first TA based on the second indication information, and the terminal device determines, based on the relationship between the at least one first threshold and the first distance or the first TA, to disable or enable the HARQ function of the at least one HARQ process. It should be understood that, in this embodiment of this application, a solution in which the terminal device determines, based on the relationship between the at least one first threshold and the first distance or the first TA, to disable or enable the HARQ function of the at least one HARQ process is the same as or similar to step S203. For brevity, details are not described herein again.

Optionally, in S306, the network device sends third indication information to the terminal device.

Correspondingly, the terminal device receives the third indication information sent by the network device.

It should be further understood that, in a possible implementation, the terminal device may further obtain the third indication information, and the third indication information further includes at least one of the following: ephemeris information, reference point information, and HARQ process information. Specifically, the ephemeris information is a precise location or a track table that varies with time during satellite running, and is a function of time. The reference point information may be a ground reference point, for example, a cell center, or may be an air reference point, for example, a fixed location coordinate. The HARQ process information is a correspondence between the at least one first threshold and the at least one HARQ process. Specifically, the HARQ process information indicates that the at least one first threshold is set for one or more HARQ processes, so that the terminal device and the network device can determine whether a HARQ function of each HARQ process is enabled or disabled. The HARQ process information may be a correspondence between a HARQ process identifier or index and the at least one first threshold, and a plurality of HARQ processes may correspond to a same first threshold.

It should be further understood that the third indication information and fifth indication information may be carried in a same message, or the third indication information and the fifth indication information may be same information, or the third indication information and the fifth indication information are respectively carried in two different messages. In an example, this is not limited in this application.

Optionally, in S307, the terminal device sends fourth indication information to the network device.

Correspondingly, the network device receives the fourth indication information sent by the terminal device, where the fourth indication information indicates whether a capability of the terminal device supports disabling of the HARQ function of the at least one HARQ process.

It should be understood that, in a possible implementation, before the network device receives the first information from the terminal device, the network device receives the third indication information from the terminal device, where the third indication information indicates whether the terminal device supports disabling of the HARQ function of the at least one HARQ process. When the terminal device supports disabling of the HARQ function of the HARQ process, the terminal device may perform step S305. When the terminal device does not support disabling of the HARQ function of the at least one HARQ process, the network device considers, by default, that the HARQ function of the at least one HARQ process of the terminal device remains in an enabled state.

It should be further understood that a sequence of step S307 is merely an example, and step S307 may be performed in any step in the method 300. This is not limited in this application.

According to the communication method provided in this embodiment of this application, the network device determines the first indication information, and determines, based on the first indication information, to disable or enable the HARQ function of the at least one HARQ process of the terminal device, so that the HARQ function of the at least one HARQ process can be disabled or enabled. When the HARQ function of the at least one HARQ process is disabled, continuous scheduling of the network device can be implemented. This effectively resolves a delay problem of a HARQ mechanism caused by a large delay in an NTN, to increase a data transmission rate. When the HARQ function of the at least one HARQ process is disabled, data scheduling reliability can be improved.

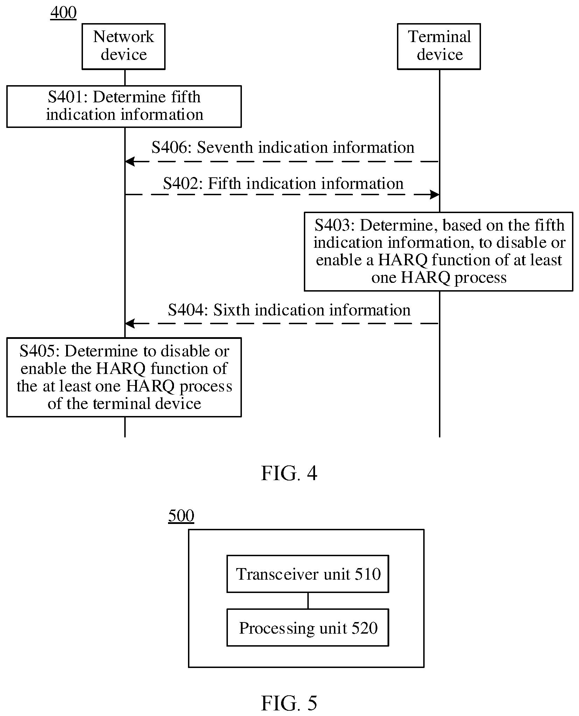

FIG. 4 is a schematic flowchart of still another example of a communication method according to an embodiment of this application. The method 400 includes steps S401 to S405. The following describes steps S401 to S405 in detail.

S401: A network device determines fifth indication information.

The network device may determine the fifth indication information depending on whether a HARQ function of at least one HARQ process of a terminal device is disabled or enabled. In this embodiment, the HARQ function includes HARQ feedback or HARQ retransmission. When the HARQ feedback is disabled, the HARQ feedback does not need to be sent for receiving of a data packet. When the HARQ retransmission is disabled, a corresponding HARQ timer, including a HARQ RTT timer or a HARQ retransmission timer, does not need to be started.

Specifically, the fifth indication information includes at least one of the following: a corresponding service type when the HARQ function of the HARQ process needs to be disabled or enabled, corresponding service quality information when the HARQ function of the HARQ process needs to be disabled or enabled, a corresponding data type when the HARQ function of the HARQ process needs to be disabled or enabled, and a corresponding deployment scenario or cell type when the HARQ function of the HARQ process needs to be disabled or enabled.

For example, the corresponding service type when the HARQ function of the HARQ process needs to be disabled or enabled may be understood as a service for which the HARQ function of the HARQ process needs to be disabled for transmission, and/or a service for which the HARQ function of the HARQ process needs to be enabled for transmission. The corresponding service quality information when the HARQ function of the HARQ process needs to be disabled or enabled may be understood as a QoS requirement corresponding to transmission that requires the HARQ function of the HARQ process to be disabled, and/or a QoS requirement corresponding to transmission that requires the HARQ function of the HARQ process to be enabled. The corresponding data type when the HARQ function of the HARQ process needs to be disabled or enabled may be understood as a data type for which the HARQ function of the HARQ process needs to be disabled for transmission, and/or a data type for which the HARQ function of the HARQ process needs to be enabled for transmission, where the data type may be understood as control plane signaling or user plane data. The corresponding deployment scenario or cell type when the HARQ function of the HARQ process needs to be disabled or enabled may be understood as a deployment scenario or cell type in which the HARQ function of the HARQ process needs to be disabled for transmission, and/or a deployment scenario or cell type in which the HARQ function of the HARQ needs to be enabled for transmission. The deployment scenario may include a geostationary earth orbit (geostationary earth orbit, GEO), a low earth orbit (low earth orbit, LEO), a medium earth orbit (medium earth orbit, MEO), or the like. The cell type may include a GEO cell, an LEO cell, an MEO cell, or the like.

Optionally, in S402, the network device sends the fifth indication information to the terminal device. Correspondingly, the terminal device receives the fifth indication information sent by the network device.

Specifically, in this embodiment of this application, the network device may send the fifth indication information to the terminal device in a broadcast, multicast, or unicast manner. In a possible implementation, when the network device sends the fifth indication information in the broadcast manner, the fifth indication information may be sent by using a system information block. For example, the fifth indication information may be sent by using a main information block (main information block, MIB), a system information block 1 (system information block, SIB1), or the like.

In a possible implementation, the terminal device may obtain the fifth indication information from another network device or terminal device. In an example, this is not limited in this embodiment of this application.

S403: The terminal device determines, based on the fifth indication information, to disable or enable the HARQ function of the at least one HARQ process.

Specifically, the terminal device may determine, based on the fifth indication information, an actually transmitted service in the HARQ process, QoS of the service, a data type, a deployment scenario, a cell type, or the like, to disable or enable the HARQ function of the at least one HARQ process.

In a possible implementation, the terminal device may obtain the fifth indication information from another network device or in a manner such as preconfiguration or protocol specification. The terminal device may determine, based on the fifth indication information and the actually transmitted service, the QoS of the service, the data type, the deployment scenario, the cell type, or the like, to disable or enable the HARQ function of the at least one HARQ process.

For example, when the fifth indication information indicates that a corresponding data type when the HARQ function of the HARQ process is disabled is voice data, after the terminal device receives the fifth indication information, the terminal device disables, based on the fifth indication information, the HARQ function of the HARQ process corresponding to the voice data. In a possible implementation, the network device may also disable, based on the fifth indication information, the HARQ function corresponding to the HARQ process corresponding to the voice data.

Optionally, in S404, the terminal device sends sixth indication information to the network device. Correspondingly, the network device receives the sixth indication information from the terminal device.

The sixth indication information is used to determine whether the HARQ function of the at least one HARQ process of the terminal device is enabled or disabled.

In a possible implementation, when the HARQ function of the at least one HARQ process changes, the terminal device needs to trigger sending of the sixth indication information to the network device. For example, when a HARQ process changes from being enabled to being disabled, or from being disabled to being enabled, the terminal device needs to send the sixth indication information to the network device.

In a possible implementation, when the terminal device does not send the sixth indication information to the network device, the network device enables the HARQ function of the at least one HARQ process of the terminal device by default.

In a possible implementation, the sixth indication information may be indicated in a form of a bitmap, and values of different bits in the bitmap may correspond to different HARQ processes. A value (for example, 0 or 1) of each bit indicates that a HARQ function of a HARQ process of the terminal device is disabled or enabled. For example, when a value of a bit in the bitmap is 0, it indicates that a HARQ function of a HARQ process corresponding to the value of the bit is enabled; or when a value of a bit in the bitmap is 1, it indicates that a HARQ function of a HARQ process corresponding to the value of the bit is disabled.

S405: The network device determines to disable or enable the HARQ function of the at least one HARQ process.

In a possible implementation, the network device determines, based on the sixth indication information from the terminal device, to disable or enable the HARQ function of the at least one HARQ process of the terminal device.

In another possible implementation, the network device may determine, based on the fifth indication information determined by the network device, to disable or enable the HARQ function of the at least one HARQ process of the terminal device.

It should be understood that step S405 is the same as or similar to step S403. For brevity, details are not described herein again.

Optionally, in S406, the terminal device sends seventh indication information to the network device. Correspondingly, the network device receives the seventh indication information sent by the terminal device.

The seventh indication information indicates whether a capability of the terminal device supports disabling of the HARQ function of the at least one HARQ process.

It should be understood that, in a possible implementation, before the terminal device receives the fifth indication information from the network device, the network device receives the seventh indication information from the terminal device, where the seventh indication information indicates whether the capability of the terminal device supports disabling of the HARQ function of the at least one HARQ process. When the terminal device supports disabling of the HARQ function of the at least one HARQ process, the terminal device may perform step S403.

It should be further understood that, in this embodiment of this application, a sequence of step S406 is merely an example, and step S406 may be performed in any step in the method 400. This is not limited in this application.

According to the communication method provided in this embodiment of this application, the network device determines the fifth indication information, and sends the fifth indication information to the terminal device, and the terminal device and the network device may determine, based on the fifth indication information, to disable or enable the HARQ function of the at least one HARQ process, so that the HARQ function of the at least one HARQ process can be disabled or enabled. When the HARQ function of the at least one HARQ process is disabled, the network device can continuously schedule data transmission. This effectively resolves a delay problem of a HARQ mechanism caused by a large delay in an NTN, to increase a data transmission rate. When the HARQ function of the at least one HARQ process is disabled, data scheduling reliability can be improved.

FIG. 5 is a block diagram of a communication apparatus according to an embodiment of this application. The communication apparatus 500 shown in FIG. 5 includes a transceiver unit 510 and a processing unit 520. The transceiver unit 510 may communicate with the outside, and the processing unit 520 is configured to perform data processing. The transceiver unit 510 may also be referred to as a communication interface or a communication unit.

Optionally, the communication apparatus 500 may further include a storage unit. The storage unit may be configured to store instructions and/or data. The processing unit 520 may read the instructions and/or the data in the storage unit.

**In** a design, the communication apparatus 500 may be configured to perform the actions performed by the terminal device or the network device in the foregoing method embodiment (the method 200, 300, or 400).

Optionally, the transceiver unit 510 may include a sending unit and a receiving unit. The sending unit is configured to perform a sending operation in the foregoing method embodiment. The receiving unit is configured to perform a receiving operation in the foregoing method embodiment.

It should be noted that the communication apparatus 500 may include the sending unit, but does not include the receiving unit. Alternatively, the communication apparatus 500 may include the receiving unit, but does not include the sending unit. This specifically depends on whether the foregoing solution performed by the communication apparatus 500 includes a sending action and a receiving action.

Optionally, the communication apparatus 500 may be a network device, the transceiver unit 510 is configured to perform a receiving or sending operation of the network device in the foregoing method embodiment, and the processing unit 520 is configured to perform an internal processing operation of the network device in the foregoing method embodiment.

Optionally, the communication apparatus 500 may be a device including the network device. Alternatively, the communication apparatus 500 may be a component configured in the network device, for example, a chip in the network device. In this case, the transceiver unit 510 may be an interface circuit, a pin, or the like. Specifically, the interface circuit may include an input circuit and an output circuit, and the processing unit 520 may include a processing circuit.

In a possible implementation, the transceiver unit 510 is configured to perform operations of steps S202, S204, S206, and S207. Optionally, the processing unit 520 is configured to perform operations of steps S201 and S205.

In a possible implementation, the transceiver unit 510 is configured to perform operations of steps S302, S304, S306, and S307. Optionally, the processing unit 520 is configured to perform operations of steps S301 and S303.

In another possible implementation, the transceiver unit 510 is configured to perform operations of steps S402, S404, and S406. Optionally, the processing unit 520 is configured to perform operations of steps S401 and S405.

For a specific operation and an implementation of performing each of the foregoing steps by the transceiver unit 510 and the processing unit 520, refer to the descriptions of the operations performed by the network device or the terminal device in the method 200, 300, or 400. Details are not described herein again.

In another design, the communication apparatus 500 shown in FIG. 5 may be configured to perform the actions performed by the terminal device in the foregoing method embodiment (the method 200, 300, or 400).

Optionally, the communication apparatus 500 may be a terminal device, the transceiver unit 510 is configured to perform a receiving or sending operation of the terminal device in the foregoing method embodiment, and the processing unit 520 is configured to perform an internal processing operation of the terminal device in the foregoing method embodiment.

Optionally, the communication apparatus 500 may be a device including the terminal device. Alternatively, the communication apparatus 500 may be a component configured in the terminal device, for example, a chip in the terminal device. In this case, the transceiver unit 510 may be an interface circuit, a pin, or the like. Specifically, the interface circuit may include an input circuit and an output circuit, and the processing unit 520 may include a processing circuit.

In a possible implementation, the transceiver unit 510 is configured to perform operations of steps S202, S204, S206, and S207. Optionally, the processing unit 520 is configured to perform an operation of step S203.

In a possible implementation, the transceiver unit 510 is configured to perform operations of steps S302, S304, S306, and S307. Optionally, the processing unit 520 is configured to perform an operation of step S305.

In another possible implementation, the transceiver unit 510 is configured to perform operations of steps S402, S404, and S406. Optionally, the processing unit 520 is configured to perform an operation of step S403.

For a specific operation and an implementation of performing each of the foregoing steps by the transceiver unit 510 and the processing unit 520, refer to the descriptions of the operations performed by the network device or the terminal device in the method 200, 300, or 400. Details are not described herein again.

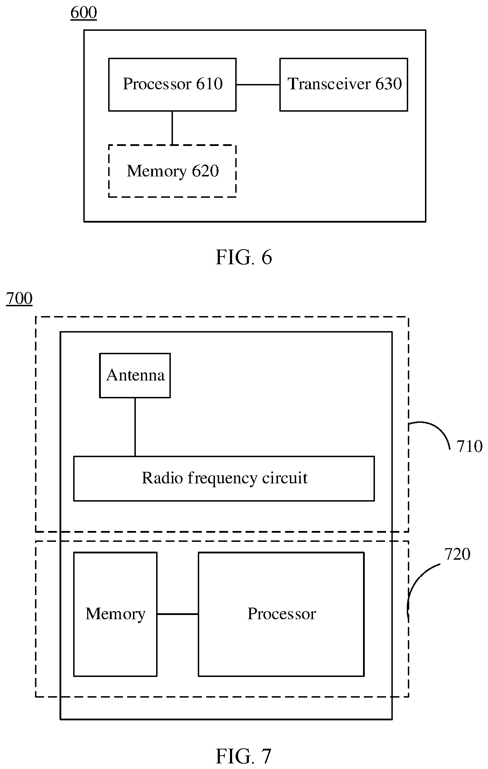

FIG. 6 is another example of a communication apparatus 600 according to an embodiment of this application. The communication apparatus 600 includes a processor 610. The processor 610 is coupled to a memory 620. The memory 620 is configured to store a computer program or instructions and/or data. The processor 610 is configured to execute the computer program or the instructions and/or the data stored in the memory 620, so that the method in the foregoing method embodiment is performed.

Optionally, the communication apparatus 600 includes one or more processors 610.

Optionally, as shown in FIG. 6, the communication apparatus 600 may further include the memory 620.

Optionally, the communication apparatus 600 may include one or more memories 620.

Optionally, the memory 620 and the processor 610 may be integrated, or separately disposed.

Optionally, as shown in FIG. 6, the communication apparatus 600 may further include a transceiver 630 and/or a communication interface. The transceiver 630 and/or the communication interface are/is configured to receive and/or send signals. For example, the processor 610 is configured to control the transceiver 630 and/or the communication interface to receive and/or send the signals.

Optionally, a component that is in the transceiver 630 and that is configured to implement a receiving function may be considered as a receiving module, and a component that is in the transceiver 630 and that is configured to implement a sending function may be considered as a sending module. In other words, the transceiver 630 includes a receiver and a transmitter. The transceiver sometimes may also be referred to as a transceiver machine, a transceiver module, a transceiver circuit, or the like. The receiver sometimes may also be referred to as a receiver machine, a receiving module, a receiver circuit, or the like. The transmitter sometimes may also be referred to as a transmitter machine, a transmitter, a transmitting module, a transmitting circuit, or the like.

In a solution, the communication apparatus 600 is configured to implement operations performed by the network device in the foregoing method embodiment. For example, the processor 610 is configured to implement an operation (for example, the operation of step S201, S205, S301, S303, S401, or S405) performed inside the network device in the foregoing method embodiment, and the transceiver 630 is configured to implement a receiving or sending operation (for example, the operations of steps S202, S204, S206, S207, S302, S304, S306, S307, S402, S404, and S406) performed by the network device in the foregoing method embodiment.

In another solution, the communication apparatus 600 is configured to implement operations performed by the terminal device in the foregoing method embodiment. For example, the processor 810 is configured to implement an operation (for example, the operation of step S203, S305, or S403) performed inside the terminal device in the foregoing method embodiment, and the transceiver 630 is configured to implement a receiving or sending operation (for example, the operations of steps S202, S204, S206, S207, S302, S304, S306, S307, S402, S404, and S406) performed by the terminal device in the foregoing method embodiment.

An embodiment of this application provides a communication apparatus 700. The communication apparatus 700 may be a network device or a chip. The communication apparatus 700 may be configured to perform the operation performed by the network device in the foregoing method embodiment.

When the communication apparatus 700 is the network device, FIG. 7 is a simplified diagram of a structure of the network device. The network device includes a part 710 and a part 720. The part 710 includes an antenna and a radio frequency circuit. The antenna is mainly configured to receive and send radio frequency signals, and the radio frequency circuit is mainly configured to perform conversion between a radio frequency signal and a baseband signal. The part 720 includes a memory and a processor, and is mainly configured to: perform baseband processing, control the network device, and the like. The part 710 may be usually referred to as a transceiver unit, a transceiver machine, a transceiver circuit, a transceiver, or the like. The part 720 is usually a control center of the network device, may be usually referred to as a processing unit, and is configured to control the network device to perform a processing operation on a network device side in the foregoing method embodiment.

Optionally, a component that is in the part 710 and that is configured to implement a receiving function may be considered as a receiving unit, and a component configured to implement a sending function may be considered as a sending unit. In other words, the part 710 includes the receiving unit and the sending unit. The receiving unit may also be referred to as a receiver machine, a receiver, a receiver circuit, or the like. The sending unit may be referred to as a transmitter machine, a transmitter, a transmitting circuit, or the like.

When data needs to be sent, the processor performs baseband processing on the to-be-sent data, and the processor outputs a baseband signal to the radio frequency circuit. After performing radio frequency processing on the baseband signal, the radio frequency circuit sends, through the antenna, a radio frequency signal to the outside in a form of an electromagnetic wave. When data is sent to the network device, the radio frequency circuit receives the radio frequency signal through the antenna, converts the radio frequency signal into a baseband signal, and outputs the baseband signal to the processor. The processor converts the baseband signal into data, and processes the data.

The part 720 may include one or more boards, and each board may include one or more processors and one or more memories. For ease of description, only one memory and one processor are shown in FIG. 7. The processor is configured to read and execute a program in the memory to implement a baseband processing function and control the network device. If there are a plurality of boards, the boards may be interconnected with each other, to enhance a processing capability. In an optional implementation, the plurality of boards may share one or more processors, or the plurality of boards share one or more memories.

For example, in an implementation, the processing unit in the part 720 is configured to perform processing operations of steps S201, S205, S301, S303, S401, or S405 in the method 200, 300, or 400, and the transceiver unit in the part 710 is configured to perform receiving and sending operations of steps S202, S204, S206, S207, S302, S304, S306, S307, S402, S404, and S406 in the method 200, 300, or 400.

It should be understood that FIG. 7 is merely an example rather than a limitation, and the network device including the transceiver unit and the processing unit may not rely on the structure shown in FIG. 7.

When the communication apparatus 700 is a chip, the chip includes a transceiver unit and a processing unit. The transceiver unit may be an input/output circuit or a communication interface. The processing unit is a processor, a microprocessor, or an integrated circuit integrated on the chip.

An embodiment of this application further provides another communication apparatus 800. The communication apparatus 800 may be a terminal device or a chip. The communication apparatus 800 may be configured to perform the operation performed by the terminal device in the foregoing method embodiment (the method 200, 300, or 400).

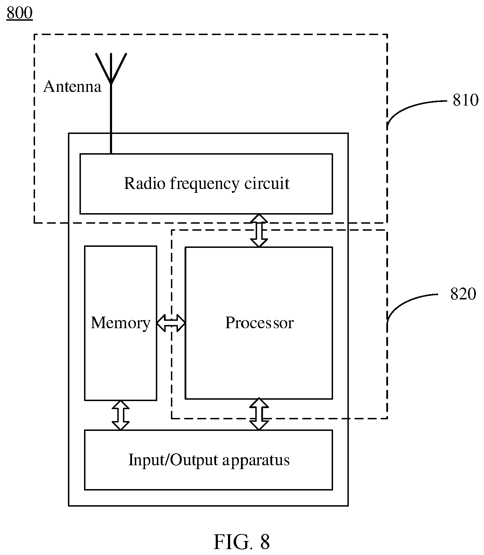

When the communication apparatus 800 is the terminal device, FIG. 8 is a simplified diagram of a structure of the terminal device. As shown in FIG. 8, the terminal device includes a processor, a memory, a radio frequency circuit, an antenna, and an input/output apparatus. The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send radio frequency signals in a form of an electromagnetic wave. The input/output apparatus, such as a touchscreen, a display, or a keyboard, is mainly configured to: receive data input by a user and output data to the user. It should be noted that some types of terminal devices may have no input/output apparatus.

When data needs to be sent, the processor performs baseband processing on the to-be-sent data, and the processor outputs a baseband signal to the radio frequency circuit. After performing radio frequency processing on the baseband signal, the radio frequency circuit sends, through the antenna, a radio frequency signal to the outside in a form of an electromagnetic wave. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 8 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have a transceiver function may be considered as a transceiver unit of the terminal device, and the processor that has a processing function may be considered as a processing unit of the terminal device.

As shown in FIG. 8, the terminal device includes a transceiver unit 810 and a processing unit 820. The transceiver unit 810 may also be referred to as a transceiver, a transceiver machine, a transceiver apparatus, a transceiver circuit, or the like. The processing unit 820 may also be referred to as a processor, a processing board, a processing module, a processing apparatus, or the like.

Optionally, a component that is in the transceiver unit 810 and that is configured to implement a receiving function may be considered as a receiving unit, and a component that is in the transceiver unit 810 and that is configured to implement a sending function may be considered as a sending unit. In other words, the transceiver unit 810 includes the receiving unit and the sending unit. The receiving unit sometimes may also be referred to as a receiver machine, a receiver, a receiving apparatus, a receiver circuit, or the like. The sending unit sometimes may also be referred to as a transmitter machine, a transmitter, a transmitting apparatus, a transmitting circuit, or the like.

For example, in an implementation, the processing unit 820 is configured to perform a processing operation on a terminal device side in the method 200, 300, or 400. For example, the processing unit 820 is configured to perform processing steps of steps S203, S305, and S403. The transceiver unit 810 is configured to perform a receiving or sending action on a terminal device side in the method 200, 300, or 400. For example, the transceiver unit 810 is configured to perform a receiving or sending operation of steps S202, S204, S206, S207, S302, S304, S306, S307, S402, S404, or S406.

It should be understood that FIG. 8 is merely an example rather than a limitation, and the terminal device including the transceiver unit and the processing unit may not rely on the structure shown in FIG. 8.

When the communication apparatus 800 is a chip, the chip includes a transceiver unit and a processing unit. The transceiver unit may be an input/output circuit or a communication interface. The processing unit may be a processor, a microprocessor, or an integrated circuit integrated on the chip.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an execution file, an execution thread, a program, and/or a computer. As illustrated by using figures, both an application that is run on a computing device and the computing device may be components. One or more components may reside in the process and/or the execution thread, and the component may be located on one computer and/or distributed between two or more computers. In addition, these components may be executed from various computer-readable media that store various data structures. The component may, for example, perform communication by using a local and/or remote process and based on a signal having one or more data packets (for example, data from two components interacting with another component in a local system, a distributed system, and/or across a network such as the Internet interacting with another system by using the signal).

A person of ordinary skill in the art may be aware that, in combination with illustrative logical blocks (illustrative logical blocks) described in embodiments disclosed in this specification and steps (steps) may be implemented by electronic hardware or a combination of computer software and electronic hardware. Whether functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for a purpose of convenient and brief descriptions, for a detailed working process of the foregoing system, apparatus, and unit, refer to a corresponding process in the foregoing method embodiment. Details are not described herein again.

It should be understood that, in embodiments of this application, "indicate" may include "directly indicate" and "indirectly indicate". For example, when a piece of indication information is described as indicating information 1, the indication information may directly indicate 1 or indirectly indicate 1, but it does not necessarily indicate that the indication information carries 1.

Information indicated by indication information is referred to as to-be-indicated information. In a specific implementation process, there are a plurality of manners of indicating the to-be-indicated information, for example, but not limited to, the following manners: The to-be-indicated information, for example, the to-be-indicated information or an index of the to-be-indicated information, is directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of all pieces of information that is pre-agreed on (for example, stipulated in a protocol), to reduce indication overheads to some extent. **In** addition, a common part of all pieces of information may further be identified and indicated in a unified manner, to reduce indication overheads caused by separately indicating same information.

**In** addition, specific indication manners may alternatively be various existing indication manners, for example, but not limited to, the foregoing indication manners and various combinations thereof. For specific details of the various indication manners, refer to a conventional technology. The details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of the to-be-indicated information.

In addition, the to-be-indicated information may have another equivalent form. For example, a row vector may be represented as a column vector, a matrix may be represented by using a transposed matrix of the matrix, or a matrix may be represented in a form of a vector or an array. The vector or array may be formed by connecting row vectors or column vectors of the matrix, and a Kronecker product of the two vectors may also be represented in a form such as a product of a vector and a transposed vector of another vector. It should be understood that the technical solutions provided in embodiments of this application cover various forms. For example, some or all features in embodiments of this application should be understood as covering various representation forms of the features.

The to-be-indicated information may be sent as a whole, or may be divided into a plurality of pieces of sub-information for separate sending. **In** addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmitting end device by sending configuration information to a receiving end device. The configuration information may include, for example, but is not limited to, one or a combination of at least two of radio resource control signaling, such as RRC signaling, MAC layer signaling such as MAC-CE signaling, and physical layer signaling such as downlink control information (downlink control information, DCI).

It should be further understood that, in embodiments shown above, first, second, third, fourth, and various numbers are merely used for differentiation for ease of description, but are not used to limit the scope of embodiments of this application and a sequence of embodiments of this application, for example, different indication information and different beams.

It should be further understood that, in embodiments shown above, "pre-configuration" may be indicated in advance by using signaling, or may be determined according to a preset rule. A specific implementation thereof is not limited in this application. Corresponding to "preconfiguration", "actual reporting" may refer to information that is actually reported by the terminal device to the network device based on channel measurement.

"Pre-configuration" may be implemented by prestoring corresponding code or a corresponding table in a device (for example, including a terminal device and a network device), or may be implemented in another manner that may indicate related information. A specific implementation thereof is not limited in this application. "Storage" may be storage in one or more memories. The one or more memories may be separately disposed, or may be integrated into an encoder or a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in this application.

It should be understood that, in embodiments of this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one item (piece) of a, b, and c may indicate a, b, c, a and b, a and c, b and c, or a, b, and c. Each of a, b, and c may be in a singular form or a plural form.

In the several embodiments provided in this application, it should be understood that the disclosed system, apparatus, and method may be implemented in another manner. For example, the described apparatus embodiment is merely an example. For example, unit division is merely logical function division and may be other division during actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electrical, mechanical, or other forms.

The units described as separate components may or may not be physically separate, and components displayed as units may or may not be physical units, may be located in one location, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units may be integrated into one unit.

In the foregoing embodiments, all or some of the functions of the functional units may be implemented by using software, hardware, firmware, or any combination thereof. When the software is used for implementation, all or some of the embodiments may be implemented in a form of a computer program product. The computer program product includes one or more computer instructions (programs). When the computer program instructions (programs) are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that can be accessed by the computer, or a data storage device, for example, a server or a data center, integrating one or more usable media. The usable medium may be a magnetic medium (for example, a floppy disk, a hard disk, or a magnetic tape), an optical medium (for example, a highdensity digital video disc (digital video disc, DVD)), a semiconductor medium (for example, a solid state disk (solid state disk, SSD)), or the like.

When the functions are implemented in a form of a software functional unit and sold or used as an independent product, the functions may be stored in a computer-readable storage medium. Based on such an understanding, the technical solutions of this application essentially, or a part contributing to a conventional technology, or a part of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a terminal device, first indication information from a network device, wherein the first indication information comprises at least one first threshold; and
determining, by the terminal device based on the first indication information, to disable or enable a HARQ function of at least one HARQ process.

2. The method according to claim 1, wherein the first indication information further comprises first information, and the determining, by the terminal device based on the first indication information, to disable or enable a HARQ function of at least one HARQ process comprises:
determining, by the terminal device based on the at least one first threshold and the first information, to disable or enable the HARQ function of the at least one HARQ process, wherein the first information is used to determine a first distance or determine a first timing advance TA.

3. The method according to claim 1, wherein the method further comprises:
obtaining, by the terminal device, first information, wherein the first information is used to determine a first distance or determine a first TA; and
the determining, by the terminal device based on the first indication information, to disable or enable a HARQ function of at least one HARQ process comprises:
determining, by the terminal device based on the first indication information and the first information, to disable or enable the HARQ function of the at least one HARQ process.

4. The method according to any one of claims 1 to 3, wherein the method further comprises:
sending, by the terminal device, second indication information to the network device, wherein the second indication information is used to determine whether the HARQ function of the at least one HARQ process of the terminal device is enabled or disabled.

5. The method according to any one of claims 1 to 4, wherein
the first indication information further indicates a correspondence between the at least one first threshold and the at least one HARQ process.

6. The method according to any one of claims 1 to 4, wherein the method further comprises:
receiving, by the terminal device, third indication information from the network device, wherein the third indication information indicates a correspondence between the at least one first threshold and the at least one HARQ process.

7. The method according to claim 2 or 3, wherein the first distance comprises: a distance between the terminal device and a satellite, a distance between the terminal device and a first reference point, a distance between the terminal device and the network device, or a sum of the distance between the terminal device and the satellite and a distance between the satellite and the network device.

8. The method according to claim 2 or 3, wherein the first TA comprises: a TA from the terminal device to a satellite, a TA from the terminal device to a first reference point, a TA from the terminal device to the network device, or a sum of the TA from the terminal device to the satellite and a TA from the satellite to the network device.

9. The method according to any one of claims 1 to 8, wherein the method further comprises:
sending, by the terminal device, fourth indication information to the network device, wherein the fourth indication information indicates whether a capability of the terminal device supports disabling of the HARQ function of the at least one HARQ process.

10. A communication method, comprising:
determining, by a network device, first indication information, wherein the first indication information comprises at least one first threshold; and
sending, by the network device, the first indication information to a terminal device, wherein the first indication information is used by the terminal device to determine to disable or enable a HARQ function of at least one HARQ process.

11. The method according to claim 10, wherein the first indication information further comprises first information, and the first information is used to determine a first distance or determine a first timing advance TA.

12. The method according to claim 10, wherein the method further comprises:
sending, by the network device, first information to the terminal device, wherein the first information is used to determine a first distance or determine a first TA.

13. The method according to any one of claims 10 to 12, wherein the method further comprises:
receiving, by the network device, second indication information from the terminal device, wherein the second indication information is used by the network device to determine whether the HARQ function of the at least one HARQ process of the terminal device is enabled or disabled.

14. The method according to any one of claims 10 to 13, wherein the first indication information further indicates a correspondence between the at least one first threshold and the at least one HARQ process.

15. The method according to any one of claims 10 to 13, wherein the method further comprises:
sending, by the network device, third indication information to the terminal device, wherein the third indication information indicates a correspondence between the at least one first threshold and the at least one HARQ process.

16. The method according to claim 11 or 12, wherein the first distance comprises: a distance between the terminal device and a satellite, a distance between the terminal device and a first reference point, a distance between the terminal device and the network device, or a sum of the distance between the terminal device and the satellite and a distance between the satellite and the network device.

17. The method according to claim 11 or 12, wherein the first TA comprises: a TA from the terminal device to a satellite, a TA from the terminal device to a first reference point, a TA from the terminal device to the network device, or a sum of the TA from the terminal device to the satellite and a TA from the satellite to the network device.

18. The method according to any one of claims 10 to 16, wherein the method further comprises:
receiving, by the network device, fourth indication information from the terminal device, wherein the fourth indication information indicates whether a capability of the terminal device supports disabling of the HARQ function of the at least one HARQ process.

19. A communication apparatus, wherein the apparatus comprises a unit configured to perform each step of the method according to any one of claims 1 to 18.

20. A communication apparatus, wherein the apparatus comprises a logic circuit, wherein the logic circuit is configured to be coupled to an input/output interface, and transmit data through the input/output interface, to perform the method according to any one of claims 1 to 18.

21. A computer-readable storage medium, wherein the computer-readable storage medium is configured to store a computer program, and when the computer program is run on a computer, the computer is enabled to perform the method according to any one of claims 1 to 18.

22. A computer program product, wherein the computer program product comprises computer program code, and when the computer program code is run, the method according to any one of claims 1 to 18 is implemented.
